# EUROPEAN PATENT APPLICATION

(11) **EP 1 508 849 A1**
(43) Date of publication of application: **23.02.2005**
(21) Application number: 03018537.5
(22) Date of filing: 18.08.2003
(51) Int. Cl.: G06F 3/023

(54) **Keyboard**

(71) Applicant: Rasmusen, Ulrik Solberg, 1150-043 Lisboa (PT)
(72) Inventor: Rasmusen, Ulrik Solberg, 1150-043 Lisboa (PT)

(57) **Abstract**

The QWERTY keyboard has been developed more than a century ago and has become an obsolete and slow keyboard that use too many keys. Especially when the space is limited for the keyboard as for example on mobile phones or palm tops with keyboards, the drawbacks of the QWERTY keyboard become evident. 'Keypad' provides a faster keyboard with fewer keys taking up less space than QWERTY. It is especially worthwhile on devices such as mobile phones and palm tops where limited space and speed are imperative. Keypad is however also a good alternative as an ordinary keyboard to the ordinary QWERTY keyboard.

## Description

The QWERTY keyboard has been developed more than a century ago and has become an obsolete and slow keyboard that use too many keys. Especially when the space is limited for the keyboard as for example on mobile phones or palm tops with keyboards, the drawbacks of the QWERTY keyboard become evident. Consequently there is a need to develop a keyboard that take up less space and is faster.

The 'Keypad' provides a faster keyboard with fewer keys taking up less space than QWERTY. It is especially worthwhile on devices such as mobile phones and palm tops where limited space and speed are imperative. Keypad is however also a good alternative as an ordinary keyboard to the ordinary QWERTY keyboard.

Based on calculations of how often the different letters are being used and the frequency of letter combinations the 'Keypad' has been developed (the reference language was English but calculations with similar results have been conducted in French and Danish). The calculations have shown that the eight most frequently used letters in English are E, T, A, N, I, O, S and R (in that order). For French the same eight letters are the most frequently used (although the order is different) and for Danish the letter D replaces O amongst the eight most commonly used letters. But these calculations show that the reorganization of the keyboard is rational and worthwhile in other languages than English and make much more sense than the letters in the ground position of the QWERTY keyboard, namely S D F G and H J K L.

Another improvement of the Keypad is related to the number of keys. Using the current QWERTY there are many more keys and fingers have to be stretched farther. With Keypad there are 30 keys and fingers will never have to stretch further than one key (starting with 8 fingers in start/ground position), namely,

Right hand fingers on T (indicator) N (long finger) S (ring finger) and R (pinky), and, Left hand fingers on O (pinky) I (ring finger) A (long finger) and E (indicator).

The letters have been arranged so that the most commonly used are place centrally, that is, for consonants the letters T N S R and for vowels E A I O. As a majority of words begin with a consonant and as consonants are used more frequently than vowels and lastly as the majority of people are right-handed - and therefore will prefer writing the word with a finger on the right hand - the consonants have been placed in right-hand side of the keyboard and vowels in left-hand side. 'Keypad' for left-handed people is obtained by 'mirroring' the letters of the right-hand version of the Keypad (but not the signs as for instance the numeric part would get confusing if mirrored/inverted).

The shift functions work like on a regular keyboard - by using Shift 1 capital letters are activated and by using Shift 2 signs in red are activated.

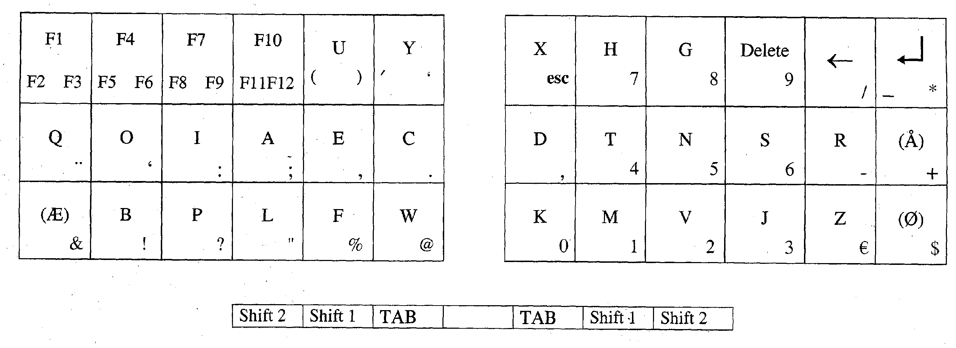

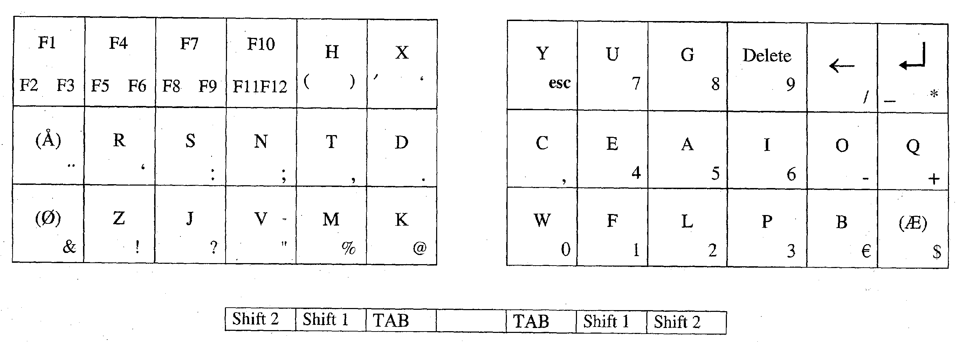

## Claims

1. A keyboard consisting of a distribution of keys as the keypad with consonants on the right hand side of the keyboard and vowels (plus a few consonants) on the left hand side.

2. A keyboard with the letters T, N, S and R in the right hand's ground position and E, A, I and O in the left hand's ground position (and vice versa for left hand keyboards).

3. A keyboard with systematic of two shift buttons in order to receive number of keys.
